# EUROPEAN PATENT APPLICATION

(11) **EP 4 597 240 A1**
(43) Date of publication of application: **06.08.2025**
(21) Application number: 23888686.5
(22) Date of filing: 07.11.2023
(51) Int. Cl.: G05B 19/18, B23Q 3/155, B23Q 17/22

(54) **MACHINE AND MACHINE TOOL WITH WORKPIECE MEASUREMENT FUNCTION**

(30) Priority: 07.11.2022 JP 2022178349
(71) Applicant: Makino Milling Machine Co., Ltd., Tokyo 152-8578 (JP)
(72) Inventor: KASAHARA, Tadashi, Aiko-gun, Kanagawa 243-0303 (JP); KAMANO, Daisuke, Aiko-gun, Kanagawa 243-0303 (JP); KASAI, Koji, Aiko-gun, Kanagawa 243-0303 (JP); OHATA, Kenichi, Aiko-gun, Kanagawa 243-0303 (JP)
(74) Representative: McWilliams, David John
(86) International application number: PCT/JP2023/039988
(87) International publication number: WO 2024/101339

(57) **Abstract**

A machine (100) having a function of measuring a workpiece (W) comprises a table (106) to which the workpiece is attached, a measurement probe (114) that detects contact with the workpiece, a linear feed shaft that moves the table and the measurement probe relative to each other, a manual pulse generator (50) that inputs a movement command to move the workpiece and measurement probe relative to each other to the feed shaft, a storage unit (26) that stores measurement point information, which is the movement direction and coordinates detected when the measurement probe contacts the workpiece, a display unit (202) that displays the measurement point information stored in the storage unit, and a measurement control device (10) that creates a measurement program on the basis of the measurement point information selected by an operator and executes the measurement program to measure the workpiece.

## Description

### FIELD

The present invention relates to a workpiece measurement device and a machine tool which enable a workpiece affixed to a table of the machine tool to be measured by a simple operation.

### BACKGROUND

When a machining program for machining a workpiece is executed in a machine tool, it is necessary to set a reference position of the workpiece in the machine tool. Thus, a measurement probe is used to measure the reference point of the workpiece. A method for automatically executing such a workpiece measurement operation using a measurement NC program is described in Patent Literature 1.

### [CITATION LIST]

### [PATENT LITERATURE]

[PTL 1] WO 2017/168727

### SUMMARY

### [TECHNICAL PROBLEM]

In the method of Patent Literature 1, the feed axis for moving the measurement probe, the movement direction, and the measurement point are instructed by jog operations from an operation panel. Because the operation panel is affixed to the cover of the machine tool, the measurement point where the measurement probe contacts the workpiece is far from the operator, making it difficult for the operator to accurately confirm the position. In particular, if the measurement point is on the back side of the workpiece, the operator cannot visually confirm the measurement point.

The technical objective of the present invention is to solve this problem of the prior art, and the present invention aims to enable an operator to easily contact the measurement probe with the desired measurement point on the surface of the workpiece to accurately measure the workpiece.

### [SOLUTION TO PROBLEM]

In order to achieve the object described above, according to the present invention, there is provided a machine having a workpiece measurement function, the machine comprising a workpiece attachment part for attaching the workpiece, a measurement probe for detecting contact with the workpiece, a linear feed axis for moving the workpiece attachment part and the measurement probe relative to each other, an operation terminal which is provided so as to be capable of being carried to an operation position near the workpiece attachment part and for inputting movement commands for moving the workpiece and the measurement probe relative to each other to the feed axis, a storage unit for storing measurement point information, which is a movement direction and coordinates detected when the measurement probe contacts the workpiece, a display unit for displaying the measurement point information stored in the storage unit, and a measurement controller which is configured so as to be capable of selecting measurement point information displayed on the display unit, generating a measurement program based on measurement point information selected by an operator, and measuring the workpiece by executing the measurement program.

### [ADVANTAGEOUS EFFECTS OF INVENTION]

Since a movement command for moving the workpiece and the measurement probe relative to each other is input to the feed axis from an operation terminal which is provided so as to be capable of being carried to an operation position near the workpiece attachment part, the operator can easily and directly visually bring the measurement probe into contact with the desired measurement point on the workpiece surface, whereby the workpiece can be accurately measured.

### BRIEF DESCRIPTION OF DRAWINGS

FIG. 1 is a side view showing an example of a machine to which the present invention is applied.
FIG. 2 is a plan view of a manual pulse generator.
FIG. 3 is a block diagram of a measurement controller according to a preferable embodiment of the present invention.
FIG. 4 is a schematic view of a screen displayed on a display unit.
FIG. 5 is a simplified perspective view detailing the movement of a measurement probe by a manual pulse generator.
FIG. 6 is a schematic view of a screen displayed on a display unit.
FIG. 7 is a simplified perspective view detailing the movement of a measurement probe by a manual pulse generator.
FIG. 8 is a schematic view of a screen displayed on a display unit.
FIG. 9 is a schematic view of a screen displayed on a display unit.
FIG. 10 is for detailing the operation of a measurement controller according to a preferred embodiment of the present invention.
FIG. 11 is for detailing the operation of a measurement controller according to a preferred embodiment of the present invention.
FIG. 12 is a schematic view showing an example of a type of measurement (reference surface measurement).
FIG. 13 is a schematic view showing an example of a type of measurement (incline measurement).
FIG. 14 is a schematic view showing an example of a type of measurement (corner measurement).
FIG. 15 is a schematic view showing an example of a type of measurement (pocket measurement).
FIG. 16 is a schematic view showing an example of a type of measurement (block measurement).
FIG. 17 is a schematic view detailing a safe height.
FIG. 18 is a schematic view of a safe height setting screen.

### DESCRIPTION OF EMBODIMENTS

The preferable embodiments of the present invention will be described below with reference to the attached drawings.

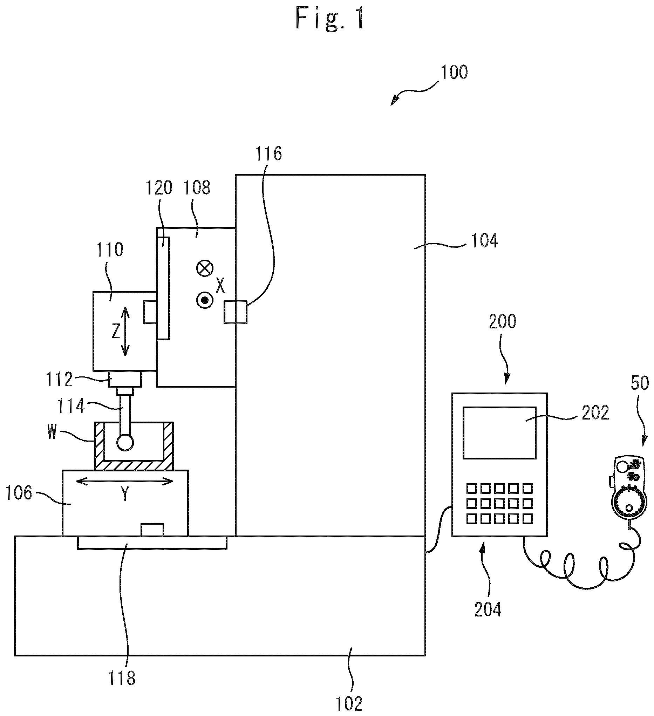

With reference to FIG. 1, an example of a machine to which the present invention is applied is shown. In FIG. 1, a machine 100 according to a preferred embodiment of the present invention constitutes a vertical machining center, and comprises a bed 102 as a base affixed to a floor of a factory, a table 106 as a workpiece attachment part which is provided on an upper surface of a front part (left side in FIG. 1) of the bed 102 so as to be movable in the front-rear direction or the Y-axis direction (left-right direction in FIG. 1) and for affixing a workpiece W, a column 104 which stands on and is affixed to an upper surface of the bed 102 at the rear end side (right side in FIG. 1) of the bed 102, an X-axis slider 108 which is provided on a front of the column 104 so as to be capable of moving in the left-right direction or the X-axis direction (direction perpendicular to the surface of the drawing in FIG. 1), a spindle head 110 which is provided in the front of the X-axis slider 108 so as to be capable of moving in the up-down direction or the Z-axis direction and which rotatably supports a spindle 112, and a cover (not illustrated) which surrounds the entire machine 100.

The cover includes an operator door for accessing a machining space, which is a space between the spindle 112 and the table 106 where the workpiece W is placed and machined. The operator door is closed during machining and during automatic measurement, which will be described later.

It should be noted the machine 100 may be a general three-dimensional measurement device.

The machine 100 performs machining by moving a tool (not illustrated) attached to the tip of the spindle 112 relative to the workpiece W affixed to the table 106 by means of feed devices along the X-, Y-, and Z-axes.

The machine 100 may also comprise associated equipment such as a tool magazine, an automatic tool changer (not illustrated) for changing tools between the spindle 112 and the tool magazine, a machining fluid supply device (not illustrated), an oil/air supply device (not illustrated), and a compressed air supply device (not illustrated).

The machine 100 further comprises an operation panel 200 with which an operator can operate the machine 100, and a manual pulse generator 50 as an operation terminal connected to the operation panel 200 and which can be carried to an operation position near the table. Though the manual pulse generator 50 as an operation terminal is wiredly connected to an NC device 150 in the present embodiment, the manual pulse generator 50 may be wirelessly connected to the NC device 150. The operation terminal may also be a handheld electronic device such as a tablet or smartphone wiredly or wirelessly connected to the NC device 150.

A tool (not illustrated) for machining the workpiece W affixed to the table 106 is attached to the tip of the spindle 112. In FIG. 1, instead of a tool, a measurement probe 114 for measuring the workpiece W is attached to the tip of the spindle 112. The measurement probe 114 can be attached manually by the operator of the machine 100 or automatically by the automatic tool changer of the machine 100.

The table 106 is provided so as to be capable of reciprocating along a pair of Y-axis guide rails (not illustrated) extending in the horizontal Y-axis direction (the left and right directions in FIG. 1) on the upper surface of the bed 102, and the bed 102 is provided with a ball screw (not illustrated) extending in the Y-axis direction and a Y-axis servo motor (not illustrated) connected to one end of the ball screw as a Y-axis feed device for driving the table 106 to reciprocate along the Y-axis guide rails, and a nut (not illustrated) for engaging with the ball screw is attached to the table 106. A Y-axis scale 118 for measuring the coordinate position of the table 106 in the Y-axis direction is also attached to the table 106.

The X-axis slider 108 is provided so as to be capable of reciprocating along a pair of X-axis guide rails (not illustrated) extending in the X-axis direction on the front surface of the upper part of the column 104. The column 104 is provided with a ball screw (not illustrated) extending in the X-axis direction and an X-axis servo motor (not illustrated) connected to one end of the ball screw as an X-axis feed device for driving the X-axis slider 108 to reciprocate along the X-axis guide rails, and a nut (not illustrated) for engaging with the ball screw is attached to the X-axis slider 108. An X-axis scale 116 for measuring the coordinate position of the X-axis slider 108 in the X-axis direction is also provided on the column 104.

The spindle head 110 is provided so as to be capable of reciprocating along a pair of Z-axis guide rails extending in the Z-axis direction (the vertical direction in FIG. 1) in front of the X-axis slider 108. The X-axis slider 108 is provided with a ball screw (not illustrated) extending in the Z-axis direction and a Z-axis servo motor (not illustrated) connected to one end of the ball screw as a Z-axis feed device for driving the spindle head 110 to reciprocate along the Z-axis guide rails, and a nut (not illustrated) for engaging with the ball screw is attached to the spindle head 110. A Z-axis scale 120 for measuring the coordinate position of the spindle head 110 in the Z-axis direction is also provided on the X-axis slider 108.

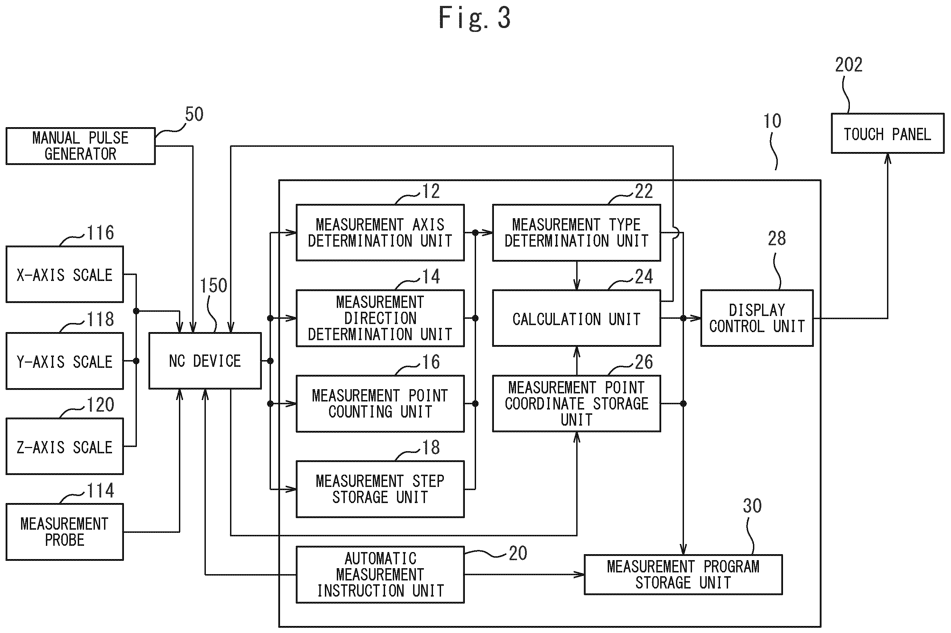

The X-axis servo motor, the Y-axis servo motor, and the Z-axis servo motor, as well as the X-axis scale 116, the Y-axis scale 118, and the Z-axis scale 120 are connected to the NC device 150 (FIG. 3) for controlling the machine 100. The measurement probe 114 is also connected to the NC device 150. The NC device 150 controls the power (current value) supplied to the X-axis servo motor, the Y-axis servo motor, and the Z-axis servo motor.

In addition to the X-axis, Y-axis, and Z-axis linear feed-axis devices, the machine 100 may comprise an A-axis, B-axis and/or C-axis rotary feed-axis device. The A-axis, B-axis, and/or C-axis rotary feed-axis device may comprise an A-axis servo motor, a B-axis servo motor, and/or a C-axis servo motor, respectively, connected to the NC device 150.

The operation panel 200 comprises a touch panel 202 as a display unit, which enables an operator to select a desired portion by touching the screen. The operation panel 200 further comprises a plurality of key switches 204 as input units. By pressing the key switches 204, predetermined numbers and letters can be input, predetermined operations can be selected, override values can be set, emergency stop of the machine tool can be performed, etc.

The manual pulse generator 50 is provided so as to be capable of manually driving, as necessary, the servo motors (not illustrated) of the X-axis, Y-axis, and Z-axis feed-axis devices, which are normally driven based on commands from the NC device 150, by sending command pulses. The manual pulse generator 50 may be configured to manually drive the servo motors of the A-axis, B-axis, and/or C-axis rotary feed-axis devices in addition to the servo motors of the X-axis, Y-axis, and Z-axis feed-axis devices.

Thus, the manual pulse generator 50 is configured so as to be capable of issuing command pulses, and comprises a pulse generation dial 51 with a scale marking its entire circumference as a pulse generation operating means, a selection switch 52 for selecting the destination of the command pulses, a magnification selection switch 53, an emergency stop button 54, an electronic circuit board (not illustrated), and in the present embodiment, an enable switch 55, a case 56 for accommodating the electronic circuit board and for mounting the switches therein and which is small enough to be held in one hand, and a cable 57 for electrical connection to the operation panel 200.

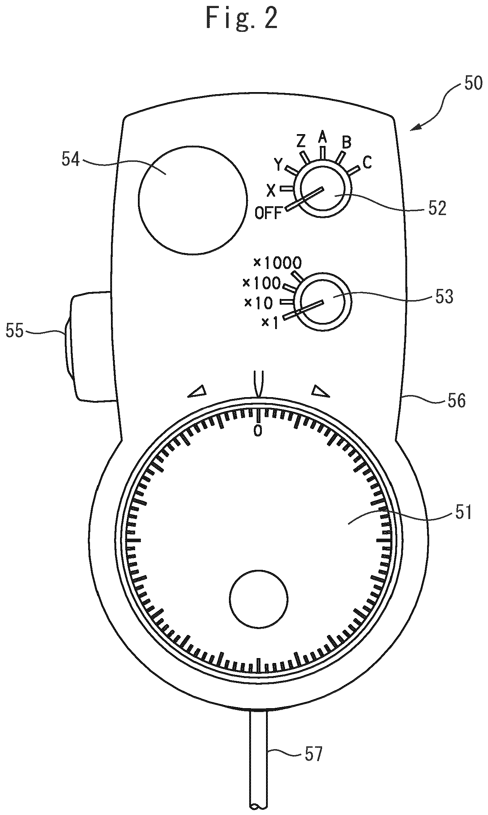

The selection switch 52 has a function for turning the power of the manual pulse generator 50 ON/OFF and a function for selecting the axis to which command pulses are sent. The display "X, Y, Z, A, B, C" around the dial of the selection switch 52 of FIG. 2 corresponds to the X-axis, Y-axis, Z-axis, A-axis, B-axis, and C-axis, respectively. Thus, when the operator selects, for example, "X", command pulses are sent to the X-axis servo motor.

The pulse generation dial 51 is configured so as to manually control the moving distances, movement directions, and movement speeds of the feed axes, etc. The moving distances of the feed axes, etc., are determined by determining the number of pulses corresponding to the scale around the dial. When the magnification selection switch 53 is set to "×1", one pulse is generated when the pulse generation dial 51 is moved by one scale. When the magnification selection switch 53 is set to "×10", "×100", or "×1000", 10-fold, 100-fold, or 1000-fold as many pulses are generated as when "×1" is selected. When the drive motor for the feed axis, etc., selected by the selection switch 52 receives command pulses, it rotates by a predetermined angle in accordance with the number of pulses.

The movement directions of the feed axes, etc., are determined by whether the pulse generation dial 51 is rotated clockwise or counterclockwise, and the positive or negative direction is determined for each feed axis, etc. The movement speeds of the feed axes are determined in accordance with the rotation speed of the pulse generation dial 51.

The enable switch 55 is formed as a push button switch, and operation of the pulse generation dial 51 is enabled and pulse transmission is permitted only while the enable switch 55 is pressed. Thus, when it is desired to transmit command pulses, it is necessary that the operator operate the pulse generation dial 51 while pressing the enable switch 55.

The manual pulse generator 50 of the present embodiment is designed in a form suitable for being held in the left hand of an operator and for rotating the pulse generation dial 51 with the right hand while pressing the enable switch 55 with the thumb of the left hand. In some cases, it may be possible to hold the manual pulse generator 50 in the right hand and rotate the pulse generation dial 51 with the left hand while pressing the enable switch 55 with the ring finger of the right hand. However, in the present embodiment, the enable switch 55 and the pulse generation dial 51 are arranged on the case 56 of the manual pulse generator 50 so that they cannot be operated simultaneously with one hand.

Next, with reference to FIG. 3 which is a block diagram of a measurement device according to a preferred embodiment of the present invention, a measurement controller 10 comprises a measurement axis determination unit 12, a measurement direction determination unit 14, a measurement point counting unit 16, a measurement step storage unit 18, an automatic measurement instruction unit 20, a measurement type determination unit 22, a calculation unit 24, a measurement point coordinate storage unit 26, a display control unit 28, and a measurement program storage unit 30 as primary components.

The measurement controller 10 may be constituted by a computer, comprising a CPU (Central Processing Unit), a memory device such as RAM (Random Access Memory) or ROM (Read-Only Memory), a storage device such as an HDD (Hard Disk Drive) or an SSD (Solid State Drive), input/output ports, and bidirectional buses interconnecting them, as well as associated software. The measurement controller 10 may be constituted by a part of the machine controller for controlling the associated devices of the machine 100, such as the tool magazine (not illustrated), the automatic tool changer (not illustrated), the machining fluid supply device (not illustrated), the oil/air supply device (not illustrated), and the compressed air supply device (not illustrated) of the machine 100.

The measurement axis determination unit 12 determines which of the X-axis, Y-axis, and Z-axis feed axes is being used to measure the workpiece W in accordance with the change in the position coordinate of the measurement probe 114 in the machine coordinate system, based on the values of the scales 116, 118, 120 of the X-axis, Y-axis, and Z-axis input to the NC device 150. The measurement direction determination unit 14 also determines the measurement direction in accordance with the change in the position coordinate of the measurement probe 114 in the machine coordinate system.

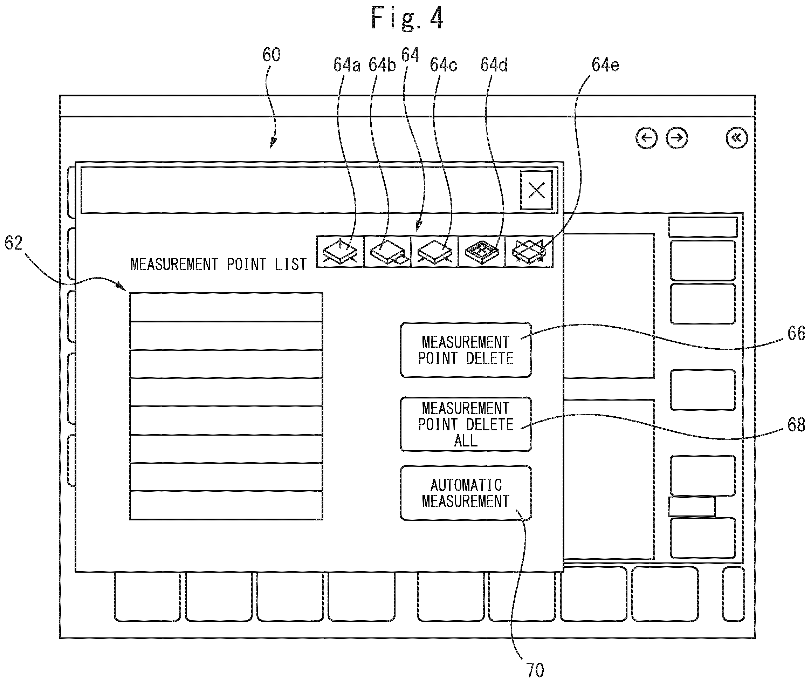

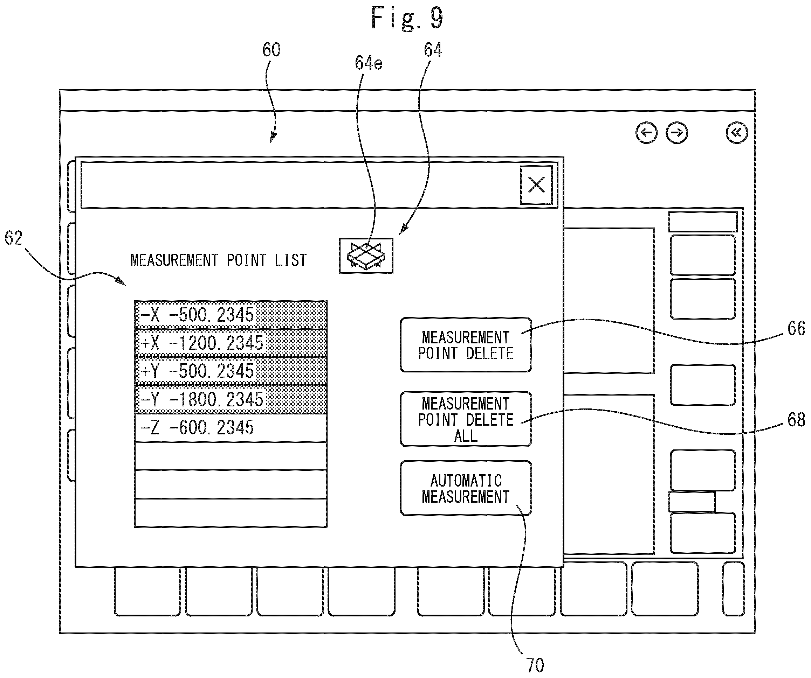

The measurement point counting unit 16 stores the measurement points where the measurement probe 114 contacts the workpiece W and feeding in the X-axis, Y-axis, and Z-axis stops, counts the number of measurement points selected by the operator from the stored measurement points, and stores this as the number of measurement points. The measurement step storage unit 18 stores the step number of the current manual pulse feed, in association with the current measurement axis and direction determined by the measurement axis determination unit 12 and the measurement direction determination unit 14. The automatic measurement instruction unit 20 issues a command to the NC device 150 to instruct by manual pulse operation when the operator touches an automatic measurement button 70 (FIGS. 4, 6, 8, and 9), which is described later, to measure the measurement point selected by the operator.

The measurement type determination unit 22 stores the types of measurements which can be performed by the measurement controller 10 in association with the measurement axis, the measurement method, the number of measurement points, and the measurement sequence.

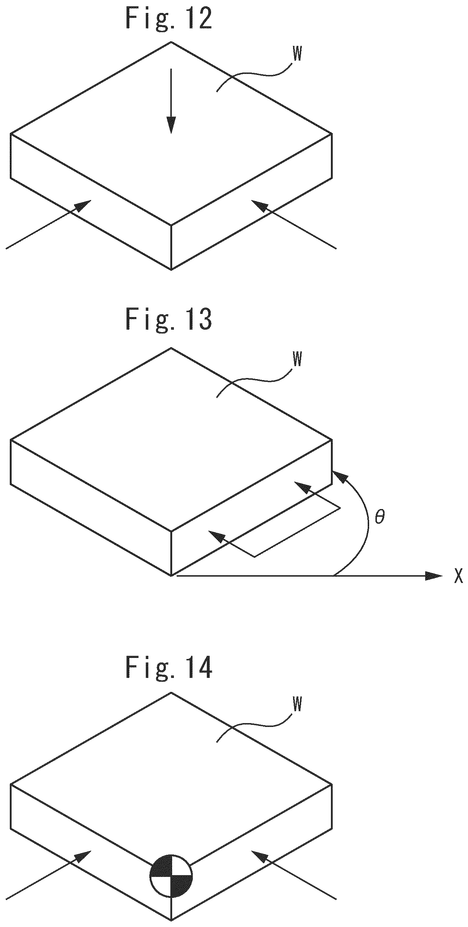

FIGS. 12 to 16 show examples of the types of measurements which can be performed by the measurement controller 10. The types of measurements shown in FIGS. 12 to 16 are merely exemplary, and other types of measurements may be performed.

FIG. 12 shows a reference surface measurement (single-axis measurement) for measuring the X-coordinate, Y-coordinate, or Z-coordinate of one of the sides of the workpiece W perpendicular to the X-axis, Y-axis or Z-axis. This is done by bringing the measurement probe 114 close to the workpiece W in the X-axis, Y-axis or Z-axis direction of the workpiece W and into contact with one of the sides of the workpiece W perpendicular to the X-axis, Y-axis or Z-axis, whereby the X-coordinate, Y-coordinate, or Z-coordinate of the side (reference surface) is measured.

FIG. 13 shows an incline measurement for measuring the inclination angle relative to the X-axis of the workpiece W. This is done by linearly bringing the measurement probe 114 close to one side surface of the workpiece W" and into contact therewith the side surface, then moving the measurement probe 114 in a direction perpendicular to the linear path along which the measurement probe 114 first approached the workpiece W, and then linearly approaching the one side surface of the workpiece W parallel to the linear path and contacting the side surface, whereby the inclination angle θ of the workpiece W relative to the X-axis is measured. When the coordinates of the two measurement points are defined as (x₁, y₁) and (x₂, y₂), the inclination angle θ can be calculated by the formula θ=ATAN(y₂-y₁)/(x₂-x₁).

FIG. 14 shows a corner measurement in which the measurement probe 114 is brought close to the workpiece W in the X-axis and Y-axis directions and brought into contact with the side of the workpiece W to measure the coordinates of the corner where both sides intersect.

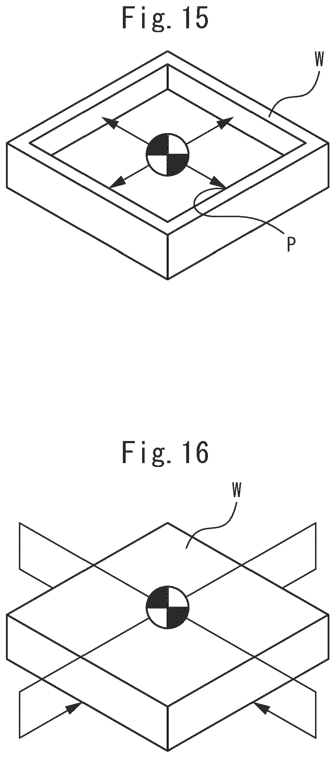

FIG. 15 shows pocket measurement for measuring the center of a rectangular pocket or recess formed in a workpiece W, in which a measurement probe 114 is placed in the pocket of the workpiece W, and the measurement probe 114 is moved along the X-axis or Y-axis to approach and contact one inner side of the pocket, then moved in the opposite direction along the X-axis or Y-axis to contact the opposite inner side of the pocket, then moved along the Y-axis or X-axis to approach the workpiece W an contact one inner side of the pocket, and then moved in the opposite direction along the Y-axis or X-axis to contact the opposite inner side of the workpiece W, whereby the center coordinates of the pocket or recess in the workpiece W are measured. When the coordinates of two measurement points measured in the X-axis direction are defined as (x₁, y₁) and (x₂, y₂) and the coordinates of two measurement points measured in the Y-axis direction are defined as (x₃, y₃) and (x₄, y₄), the coordinates of the center are expressed as ((x₁+x₂)/2, (y₃ +y₄)/2).

FIG. 16 shows a block measurement for measuring the central coordinates of a rectangular parallelepiped workpiece W, in which the measurement probe 114 is moved toward the workpiece W along the X-axis or Y-axis to contact a side of the workpiece W, then moved toward the workpiece W in the opposite direction along the X-axis or Y-axis to contact the opposite side of the workpiece W, then moved toward the workpiece W along the Y-axis or X-axis to contact a side of the workpiece W, and then moved toward the workpiece W in the opposite direction along the Y-axis or X-axis to contact the opposite side of the workpiece W, whereby the central coordinates of the workpiece W are measured. When the coordinates of two measurement points measured in the X-axis direction are defined as (x₁, y₁), (x₂, y₂) and the coordinates of two measurement points measured in the Y-axis direction are defined as (x₃, y₃), (x₄, y₄), the coordinates of the center are expressed as ((x₁+x₂)/2, (y₃+y₄)/2).

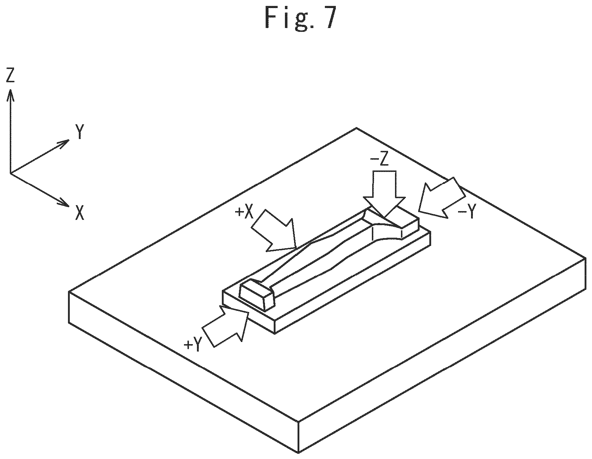

Next, an example of a workpiece measuring method of the present invention will be described with reference to FIGS. 4 to 18.

FIGS. 4, 6, 8, and 9 show a screen 60 displayed on the touch panel 202 when starting a measurement operation of the workpiece W using the manual pulse generator 50. The screen 60 has a measurement point display area 62 which lists and displays measurement point information, a measurement method display area 64, a measurement point delete button 66 for deleting the measurement point information displayed in the measurement point display area 62, a measurement point delete all button 68, and an automatic measurement button 70.

Examples of icons displayed in the measurement method display area 64 include an icon (reference surface measurement icon) 64a indicating the reference surface measurement of FIG. 12, an icon (incline measurement icon) 64b indicating the incline measurement of FIG. 13, an icone (corner measurement icon) 64c indicating the corner measurement of FIG. 14, an icon (pocket measurement icon) 64d indicating the pocket measurement of FIG. 15, and an icon (block measurement icon) 64e indicating the block measurement of FIG. 16.

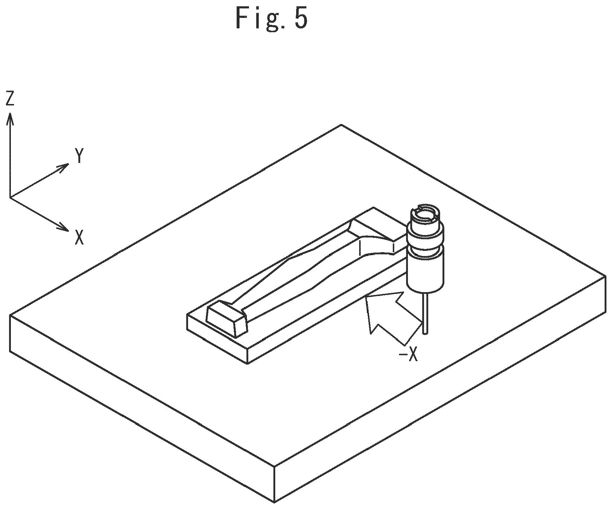

As shown in, for example, FIG. 5, when the measurement probe 114 attached to the tip of the spindle 112 is moved in the X-axis direction relative to the workpiece W affixed to the table 106 using the manual pulse generator 50, the measurement axis determination unit 12 determines that measurement of the X-axis is being performed based on the operation commands of the X-axis, Y-axis, and Z-axis feed axes. At the same time, the measurement direction determination unit 14 determines that the measurement probe 114 is moving in the negative direction along the X-axis based on the movement command.

Next, when the measurement probe 114 contacts the side surface of the workpiece W, a skip signal is output from the measurement probe 114 to the NC device 150. When the skip signal is received, the coordinates of each of the X-axis, Y-axis, and Z-axis feed axes at that time are output from the NC device 150 to the measurement point coordinate storage unit 26. Furthermore, when the NC device 150 receives the skip signal, the feeding in the X-axis is reversed, the measurement probe 114 is moved away from the workpiece W, and the reversing operation of the measurement probe 114 is stopped when it has moved a predetermined distance. The measurement step storage unit 18 stores the manual pulse feed operation by the operator described above as a first step.

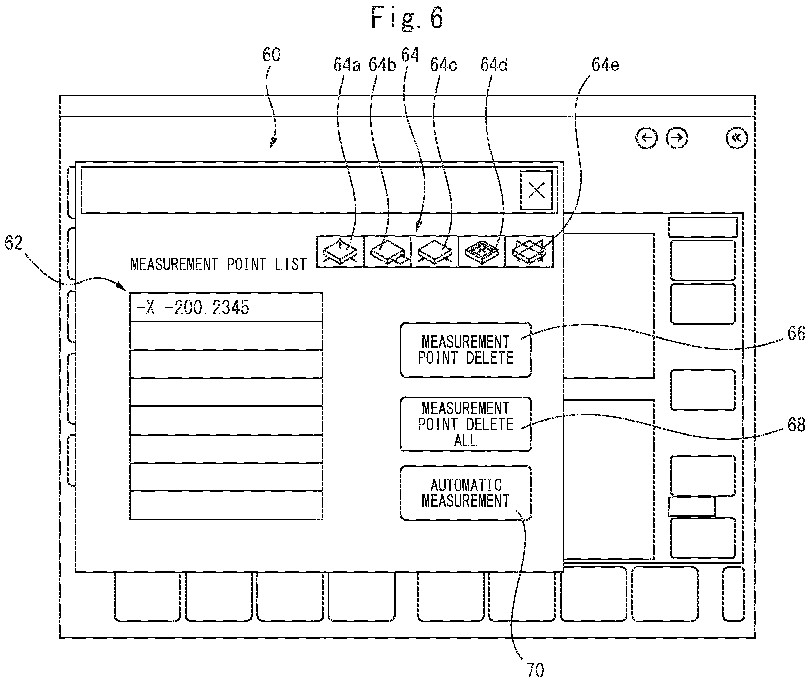

At this time, the measurement type determination unit 22 receives and stores information that the X-axis was used in the current measurement by manual pulse operation from the measurement axis determination unit 12, and information that the measurement probe 114 has moved in the negative direction from the measurement direction determination unit 14. The display control unit 28 receives these two pieces of information from the measurement type determination unit 22, i.e., information that the measurement probe 114 has moved in the negative direction along the X-axis relative to the workpiece W, and also receives the X-axis coordinate value from the measurement point coordinate storage unit 26, and displays the X-coordinate value in the topmost column of the measurement point display area 62 on the screen 60 on the touch panel 202, as shown in FIG. 6.

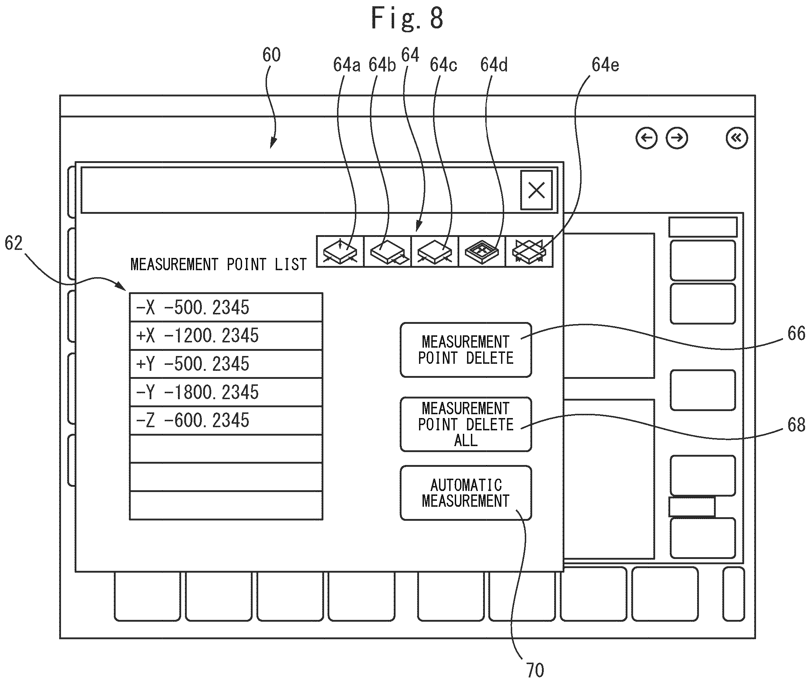

Likewise, the measurement probe 114 is moved in the positive direction along the X axis, the negative direction along the Y axis, the positive direction along the Y axis, and/or the negative direction along the Z axis, and the X axis, Y axis, and/or Z axis coordinate values when the measurement probe 114 contacts the workpiece W are sequentially displayed in a list in the measurement point display area 62 of the screen 60 when the manual pulse operation along the X axis, Y axis, and/or Z axis is completed, as shown in FIG. 8. It should be noted though FIG. 8 shows the -X, +X, -Y, +Y, and -Z coordinate values, obviously the measurement point display area 62 displays the coordinate values corresponding to the manual pulse operation performed by the operator.

The coordinate values displayed in the measurement point display area 62 are actively displayed when the operator touches the touch panel 202. They can then be deleted by touching the measurement point delete button 66. Further, all coordinate values displayed in the measurement point display area 62 can be deleted by touching the measurement point delete all button 68. In this manner, the operator can redo the measurement of the workpiece W by manual pulse operation.

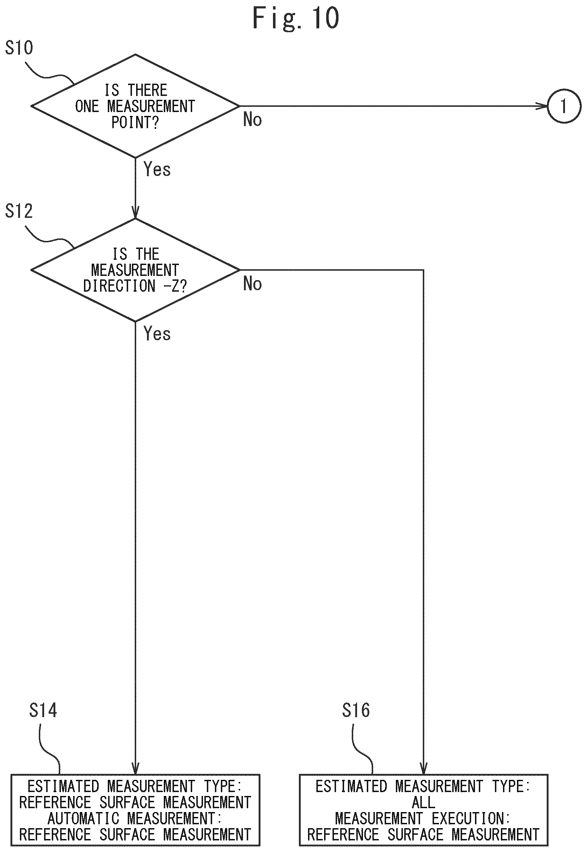

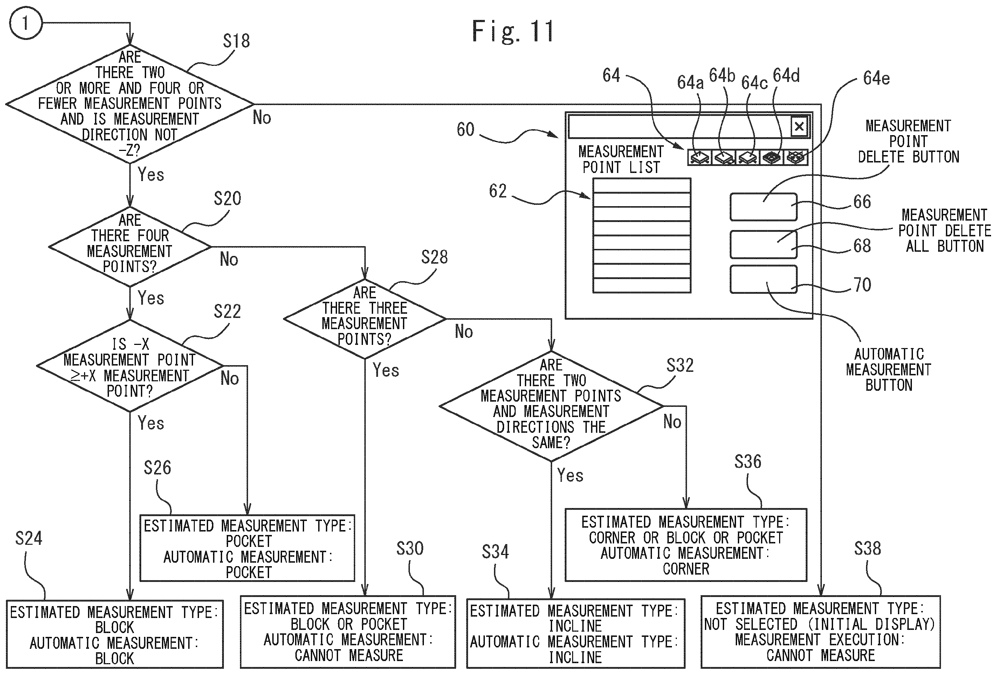

While the operator is selecting the taught measurement point by manual pulse operation, the measurement type determination unit 22 performs determination of the type of measurement. The operation of the present embodiment will be described with reference to FIGS. 10 and 11.

First, the measurement type determination unit 22 judges whether the number of measurement points is one based on information from the measurement point counting unit 16. When the number of measurement points is one (Yes in step S10), the measurement type determination unit 22 receives the measurement direction (the movement direction of the feed axis) from the measurement direction determination unit 14 in step S12, and judges whether the measurement direction is a negative direction along the Z axis. In the case of Yes in step S12, and specifically, when the measurement direction by the manual pulse operation is a negative direction along the Z axis, the measurement type determination unit 22 estimates that the measurement performed by the operator using the manual pulse generator 50 is the reference surface measurement (single-axis measurement in the Z axis direction) shown in FIG. 12. The display control unit 28 displays only the icon 64a indicating the reference surface measurement of FIG. 12 in the measurement method display area 64 based on the estimation result.

When the operator touches the automatic measurement button 70, the NC device 150 executes an automatic measurement program stored in the measurement program storage unit 30. The measurement program storage unit 30 can generate an automatic measurement program by inputting or combining numerical values such as measurement point information (measurement point coordinate value, measurement direction), safe height, etc., into a blank measurement program corresponding to a specific measurement method such as the reference surface measurement, the incline measurement, the corner measurement, the pocket measurement, and the block measurement, which will be described later, and store the automatic measurement program. The measurement program storage unit 30 stores such blank measurement programs and automatic measurement programs which have been executed in the past.

When the operator selects, for example, a measurement instruction in the negative direction along the Z axis using the manual pulse generator 50 and then touches the automatic measurement button 70, the determination of step S12 becomes Yes, and numerical values such as measurement point information (measurement point coordinate value, measurement direction), safe height, etc., are input or combined into a blank measurement program for measuring a reference plane perpendicular to the Z axis of the workpiece W (single-axis measurement in the -Z axis direction), an automatic measurement program is generated, and the automatic measurement program is executed by the NC device 150 (step S14).

According to the automatic measurement program, the NC device 150 moves the measurement probe 114 along the Z axis toward the coordinates of the measurement point stored in the measurement point coordinate storage unit 26 (the coordinates of the X-axis, Y-axis, and Z-axis feed axes when the measurement probe 114 contacts the workpiece W). When the tip of the measurement probe 114 contacts the upper surface of the workpiece W, a skip signal is output from the measurement probe 114 to the NC device 150.

When the skip signal is received, the coordinates of each of the X-axis, Y-axis, and Z-axis feed axes at that time are output from the NC device 150 to the measurement point coordinate storage unit 26. Furthermore, when the NC device 150 receives the skip signal, the feeding in the Z-axis is reversed, the measurement probe 114 is moved away from the workpiece W, and the reversing operation of the measurement probe 114 is stopped when it has moved a predetermined distance.

When the automatic measurement is completed, the calculation unit 24 calculates the dimension in the Z-axis direction as the height of the workpiece W based on the measured values. The measurement result is displayed on the touch panel as the height or the dimension in the Z-axis direction of the workpiece W.

When the measurement direction is not the negative direction along the Z axis (No in step S12), and specifically, when the measurement direction is the negative or positive direction along the X or Y axis, since all of the measurement methods shown in FIGS. 12 to 16 can be estimated, the reference surface measurement icon 64a, the incline measurement icon 64b, the corner measurement icon 64c, the pocket measurement icon 64d, and the block measurement icon 64e are all displayed in the measurement method display area 64. The measurement axis determination unit 12 determines which of the X-axis or Y-axis axis feed device has been used.

At this time, when the operator touches the automatic measurement button 70, since the determination of step S10 is Yes and the determination of step S12 is No, when the automatic measurement program is executed, the measurement probe 114 moves along the X-axis or Y-axis toward the coordinates of the measurement point stored in the measurement point coordinate storage unit 26 (the coordinates of the X-axis, Y-axis, and Z-axis feed axes when the measurement probe 114 contacts the workpiece W) based on information from the measurement axis determination unit 12. Specifically, though all measurement methods are estimated before the automatic measurement button 70 is touched, when the automatic measurement button 70 is touched, since the measurement teaching by the manual pulse operation is the measurement of one point along the X-axis or Y-axis, a reference plane measurement perpendicular to the corresponding feed axis is executed.

More specifically, when the operator instructs the manual pulse generator 50 to perform measurement along a feed axis other than the Z axis (X-axis or Y-axis), selects it, and then touches the automatic measurement button 70 in this state, the determination of step S12 becomes No, and an automatic measurement program is executed to measure a reference plane perpendicular to the feed axis that the operator measured using the manual pulse generator 50 (single-axis measurement in the X-axis or Y-axis direction) (step S16).

The automatic measurement method in this case is generally similar to the method described above in relation to the Z-axis, except that the feed axis is the X-axis or Y-axis feed axis. The NC device 150 moves the measurement probe 114 along the X-axis or Y-axis, based on information from the measurement axis determination unit 12, toward the coordinates of the measurement point stored in the measurement point coordinate storage unit 26 (the coordinates of the X-axis, Y-axis, and Z-axis feed axes when the measurement probe 114 contacts the workpiece W), in accordance with the automatic measurement program.

When the tip of the measurement probe 114 contacts a side surface perpendicular to the X-axis or Y-axis of the workpiece W, a skip signal is output from the measurement probe 114 to the NC device 150. When the skip signal is received, the coordinates of each of the X-axis, Y-axis, and Z-axis feed axes at that time are output from the NC device 150 to the measurement point coordinate storage unit 26. Furthermore, when the NC device 150 receives the skip signal, the feeding in the X-axis or Y-axis is reversed, the measurement probe 114 is moved away from the workpiece W, and the reversing operation of the measurement probe 114 is stopped when it has moved a predetermined distance. When the automatic measurement is completed, the calculation unit 24 displays the X-coordinate or Y-coordinate on the touch panel based on the measured value.

In the case of No in step S10, and specifically, when there are a plurality of measurement points, the flow chart proceeds to step S18 and onwards to determine whether the number of measurement points is two (No in step S10, Yes in step S18, No in step S20, and No in step S28 ), three (No in step S10, Yes in step S18, No in step S20, and Yes in step S28), four (No in step S10, Yes in step S18, and Yes in step S20), or five or more (No in step S10 and No in step S18).

When the number of measurement points is four, a block measurement (step S24) or a pocket measurement (step S26) is performed.

For example, when the operator manually operates a pulse to move the measurement probe 114 along the X-axis toward the workpiece W, the measurement axis determination unit 12 determines that the measurement of the X-axis is being performed based on the operation commands of the X-axis, Y-axis, and Z-axis feed axes. At the same time, the measurement direction determination unit 14 determines based on the operation commands of the X-axis, Y-axis, and Z-axis feed axes whether the movement of the measurement probe 114 along the X-axis is in the direction in which the X coordinate value increases or decreases.

When the measurement probe 114 contacts the side surface of the workpiece W, a skip signal is output from the measurement probe 114 to the NC device 150. When the skip signal is received, the coordinates of each of the X-axis, Y-axis, and Z-axis feed axes at that time are output from the NC device 150 to the measurement point coordinate storage unit 26. Furthermore, when the NC device 150 receives the skip signal, the feeding in the X-axis is reversed, the measurement probe 114 is moved away from the workpiece W, and the reversing operation of the measurement probe 114 is stopped when it has moved a predetermined distance. The measurement step storage unit 18 stores the manual pulse feed operation by the operator described above as a first measurement step.

At this time, the measurement type determination unit 22 receives from the measurement axis determination unit 12 information that only the X axis was used in the current measurement, from the measurement direction determination unit 14 information that the measurement probe 114 has moved in the positive direction along the X axis, from the measurement point counting unit 16 information that there is only one measurement point, and from the measurement step storage unit 18 information that the current measurement only includes the step of moving the measurement probe 114 along the X axis. Based on this, all of the icons, and specifically, the reference surface measurement icon 64a, the incline measurement icon 64b, the corner measurement icon 64c, the pocket measurement icon 64d, and the block measurement icon 64e, are displayed in the measurement method display area 64 as the measurements taught by the operator by manual pulse feed (step S16).

Next, when the operator moves the measurement probe 114 closer to the workpiece W in the opposite direction along the X-axis by a manual pulse feed operation, the measurement axis determination unit 12 determines that measurement of the X-axis is being performed from the operation commands of the X-axis, Y-axis, and Z-axis feed axes. At the same time, the measurement direction determination unit 14 determines that the measurement probe 114 is being fed in the opposite direction along the X-axis from the operation commands of the X-axis, Y-axis, and Z-axis feed axes.

When the measurement probe 114 comes into contact with the side surface of the workpiece W, due to a skip signal from the measurement probe 114, the coordinates of the X-axis, Y-axis, and Z-axis feed axes at that time are output from the NC device 150 to the measurement point coordinate storage unit 26, and the feeding in the X-axis is reversed so that the measurement probe 114 is fed in a direction away from the workpiece W. When the measurement probe 114 moves a predetermined distance, the reversing operation of the measurement probe 114 is stopped. The measurement step storage unit 18 stores the manual pulse feed operation by the operator as a second measurement step.

At this time, the measurement type determination unit 22 receives from the measurement axis determination unit 12 information that the X axis was used in the measurement, from the measurement direction determination unit 14 information that the measurement probe 114 moved in both the positive and negative directions along the X axis, from the measurement point counting unit 16 information that there are two measurement points, and from the measurement step storage unit 18 information that the current measurement includes two steps in which the measurement probe 114 was moved in opposite directions along the X axis. Based on this, the corner measurement icon 64c, the pocket measurement icon 64d, and the block measurement icon 64e are displayed in the measurement method display area 64 as the measurements taught by the operator by manual pulse feed (step S36).

Furthermore, when the operator moves the measurement probe 114 toward the workpiece W in the negative direction along the Y axis by a manual pulse feed operation, the measurement axis determination unit 12 determines that the measurement of the Y axis is being performed from the operation commands of the feed axes of the X, Y, and Z axes. At the same time, the measurement direction determination unit 14 determines that the measurement probe 114 is being fed in a direction in which the Y coordinate value decreases from the operation commands of the X-axis, Y-axis, and Z-axis feed axes.

When the measurement probe 114 comes into contact with the side surface of the workpiece W, due to a skip signal from the measurement probe 114, the coordinates of the X-axis, Y-axis, and Z-axis feed axes at that time are output from the NC device 150 to the measurement point coordinate storage unit 26, and the feeding in the Y-axis is reversed so that the measurement probe 114 is fed in a direction away from the workpiece W. When the measurement probe 114 moves a predetermined distance, the reversing operation of the measurement probe 114 is stopped. The measurement step storage unit 18 stores the manual pulse feed operation by the operator described above as a third measurement step.

At this time, the measurement type determination unit 22 receives information from the measurement axis determination unit 12 that the X-axis and Y-axis were used in the measurement, and information from the measurement point counting unit 16 that there are three measurement points. Based on this, the pocket measurement icon 64d and the block measurement icon 64e are displayed in the measurement method display area 64 as the measurements taught by the operator by manual pulse feed (step S30).

Furthermore, when the operator moves the measurement probe 114 closer to the workpiece W in the positive direction along the Y axis by a manual pulse feed operation, the measurement axis determination unit 12 determines that the measurement of the Y axis is being performed from the operation commands of the feed axes of the X axis, Y axis, and Z axis. At the same time, the measurement direction determination unit 14 determines that the measurement probe 114 is being fed in the positive direction along the Y axis from the operation commands of the feed axes of the X axis, Y axis, and Z axis.

When the measurement probe 114 comes into contact with the side surface of the workpiece W, due to a skip signal from the measurement probe 114, the coordinates of the X-axis, Y-axis, and Z-axis feed axes at that time are output from the NC device 150 to the measurement point coordinate storage unit 26, and the feeding in the Y-axis is reversed so that the measurement probe 114 is fed in a direction away from the workpiece W. When the measurement probe 114 moves a predetermined distance, the reversing operation of the measurement probe 114 is stopped. The measurement step storage unit 18 stores the above-mentioned manual pulse feed operation by the operator as a fourth measurement step.

When there are four measurement points measured by manual pulse operation in this manner, in step S22, the measurement type determination unit 22 compares the coordinate value (-X measurement point) when the measurement probe 114 is moved in the negative direction along the X axis and contacts the workpiece W with the coordinate value (+X measurement point) when the measurement probe 114 is moved in the positive direction and contacts the workpiece W based on information from the measurement axis determination unit 12, the measurement direction determination unit 14, and the measurement point coordinate storage unit 26.

When (-X measurement point) ≥ (+X measurement point) (Yes in step S22), the measurement type determination unit 22 estimates that the measurement performed by the operator using the manual pulse generator 50 is the block measurement of FIG. 16. The display control unit 28 displays only the block measurement icon 64e based on the estimation result. When (-X measurement point) < (+X measurement point) (No in step S22), the measurement type determination unit 22 estimates that the measurement performed by the operator using the manual pulse generator 50 is the pocket measurement of FIG. 15. The display control unit 28 displays only the pocket measurement icon 64d based on the estimation result.

In step S22, the coordinate value (-Y measurement point) when the measurement probe 114 is moved in the negative direction along the Y axis and contacts the workpiece W may be compared with the coordinate value (+Y measurement point) when the measurement probe 114 is moved in the positive direction and contacts the workpiece W.

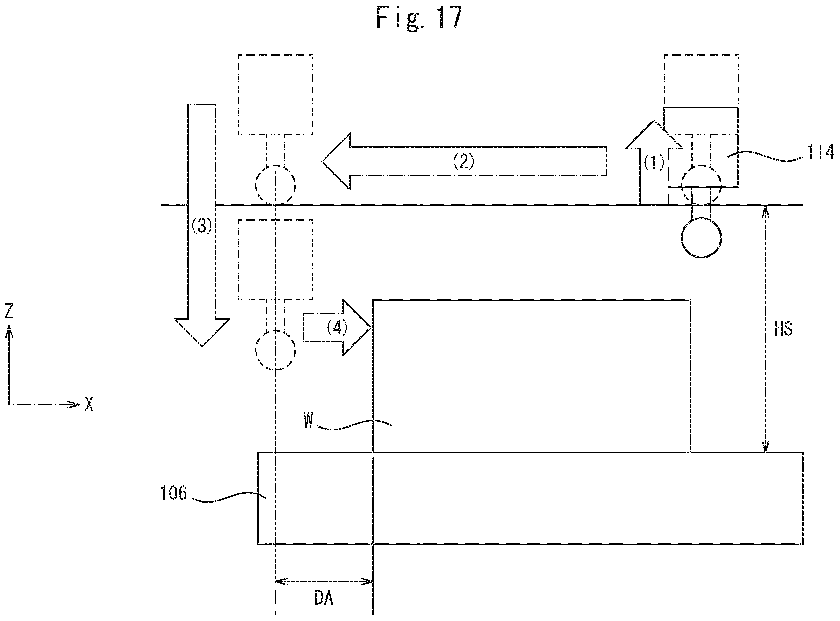

When automatically measuring a measurement point taught by manual pulse operation, the measurement probe 114 is moved in one direction along the X-axis or Y-axis to contact the workpiece W, and before moving the measurement probe 114 in the opposite direction along the same feed axis, the measurement probe 114 is (1) moved higher than the workpiece W, (2) passed above the workpiece W, (3) placed at a predetermined distance (DA) from the workpiece W, and (4) moved toward the workpiece W, as shown in FIG. 17. In this case, in order to prevent collision between the measurement probe 114 and the workpiece W, it is preferable to set a safe height HS higher than the height of the workpiece W in advance.

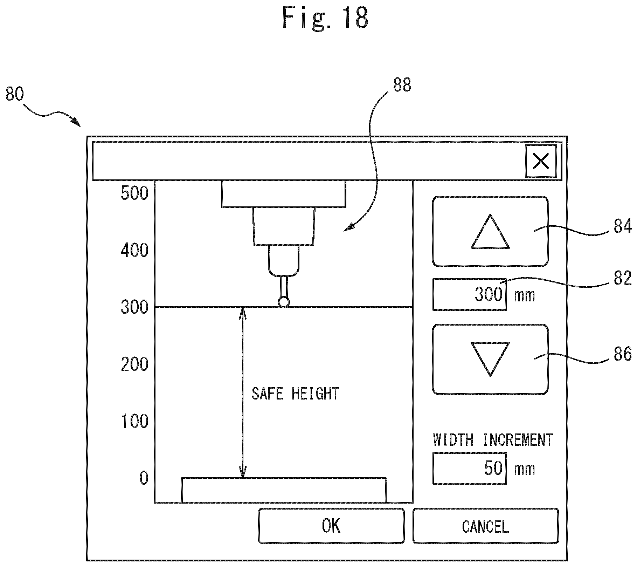

In order to set the safe height HS, for example, a safe height setting screen 80 as shown in FIG. 18 can be displayed on the touch panel 202. The safe height setting screen 80 can have, for example, a display part 82 for the safe height HS, and an increase button 84 and a decrease button 86 for the numerical value of the safe height HS. The safe height setting screen 80 may include a graphic 88 indicating that the screen is a screen for setting the safe height.

When more accurate measurements are required, it is desirable to contact the measurement probe 114 with the workpiece W at a constant speed so that the amount of deflection of the measurement probe 114 when the skip signal rises is uniform. When measurements are made under conditions of constant contact speed, the operator uses a manual pulse feed operation to teach the measurement probe 114 to contact the workpiece W, selects it, and then touches the automatic measurement button 70 to use a measurement program for performing a series of contact operations between the measurement probe 114 and the workpiece W at a constant speed.

When there are three measurement points (No in step S10, Yes in step S18, No in step S20, and Yes in step S28), in step S30, the measurement type determination unit 22 estimates, based on the information from the measurement axis determination unit 12, the measurement direction determination unit 14, and the measurement point coordinate storage unit 26, that the measurement performed by the operator using the manual pulse generator 50 is the block measurement of FIG. 16 or the pocket measurement of FIG. 15, but automatic measurement cannot be executed.

When there are two measurement points (No in step S10, Yes in step S18, No in step S20, and No in step S28), in step S32, the measurement type determination unit 22 determines whether the measurements made by the operator using the manual pulse generator 50 were made for the same feed axis in the same direction based on the information from the measurement axis determination unit 12 and the measurement direction determination unit 14. If measurements were made for the same feed axis in the same direction (Yes in step S32), the measurement type determination unit 22 estimates that the measurements made by the operator using the manual pulse generator 50 are the incline measurement shown in FIG. 13, and displays the incline measurement icon 64b (step S34).

For example, when the operator further moves the measurement probe 114 closer to the workpiece W along the X-axis by manual pulse feed operation, the measurement axis determination unit 12 determines that an X-axis measurement is being performed, and at the same time, the measurement direction determination unit 14 determines that the measurement probe 114 is being fed in the positive direction along the X-axis.

Furthermore, the operator uses a manual pulse feed operation to move the measurement probe 114 in a direction perpendicular (Y-axis direction) to the linear path (X-axis) along which the measurement probe 114 was first brought close to the workpiece W, and then moves the measurement probe 114 parallel to the linear path (X-axis direction) to linearly approach the same side surface of the workpiece W and contact the side surface. At this time, the measurement axis determination unit 12 determines that measurement of the X-axis is being performed, and at the same time, the measurement direction determination unit 14 determines that the measurement probe 114 is being fed in the positive direction along the X-axis.

At this time, the measurement type determination unit 22 displays the incline measurement icon 64b in the measurement method display area 64 based on information from the measurement axis determination unit 12 that the X-axis was used in the measurement, information from the measurement direction determination unit 14 that the measurement probe 114 was fed in the positive direction along the X-axis, and information from the measurement point counting unit 16 that there are two measurement points.

When the operator touches the automatic measurement button 70, the NC device 150 moves the measurement probe 114 toward the coordinates of the measurement point stored in the measurement point coordinate storage unit 26 (the coordinates of each of the X-axis, Y-axis, and Z-axis feed axes when the measurement probe 114 contacts the workpiece W) in accordance with the automatic measurement program. When the tip of the measurement probe 114 contacts the workpiece W, a skip signal is output from the measurement probe 114 to the NC device 150. When the skip signal is received, the coordinates of each of the X-axis, Y-axis, and Z-axis feed axes at that time are output from the NC device 150 to the measurement point coordinate storage unit 26.

Furthermore, when the NC device 150 receives the skip signal, the feeding in the X-axis is reversed, the measurement probe 114 is moved away from the side of the workpiece W, and the reversing operation of the measurement probe 114 is stopped when it has moved a predetermined distance. The NC device 150 performs similar measurements for the remaining measurement points. The calculation unit 24 calculates the inclination angle θ relative to the X-axis of the workpiece W with which the measurement probe 114 contacts from the coordinate values of the two measurement points.

When the measurement performed by the operator using the manual pulse generator 50 is not performed in the same direction for the same feed axis (No in step S32), the measurement type determination unit 22 estimates that the measurement performed by the operator using the manual pulse generator 50 is the corner measurement of FIG. 14, the pocket measurement of FIG. 15, or the block measurement of FIG. 16, and displays the corner measurement icon 64c, the pocket measurement icon 64d, and the block measurement icon 64e (step S36).

At this time, when the operator touches the automatic measurement button 70, the measurement type determination unit 22 determines that the measurement taught by the operator by manual pulse feed is the corner measurement, based on the information from the measurement axis determination unit 12 that the X-axis and Y-axis were used in the measurement, the information from the measurement direction determination unit 14 that the measurement probe 114 was moved in the positive direction along both the X-axis and the Y-axis, the information from the measurement point counting unit 16 that there are two measurement points, and the information from the measurement step storage unit 18 that the current measurement includes two steps in which the measurement probe 114 was moved in the positive direction along the Y-axis and the X-axis, and only the corner measurement icon 64c is displayed.

At the same time, the NC device 150 moves the measurement probe 114 toward the coordinates of the measurement point stored in the measurement point coordinate storage unit 26 (the coordinates of each of the X-axis, Y-axis, and Z-axis feed axes when the measurement probe 114 contacts the workpiece W) in accordance with the automatic measurement program. When the tip of the measurement probe 114 contacts the workpiece W, a skip signal is output from the measurement probe 114 to the NC device 150. When the skip signal is received, the coordinates of each of the X-axis, Y-axis, and Z-axis feed axes at that time are output from the NC device 150 to the measurement point coordinate storage unit 26.

Furthermore, when the NC device 150 receives the skip signal, the feeding in the X-axis is reversed, the measurement probe 114 is moved away from the side of the workpiece W, and the reversing operation of the measurement probe 114 is stopped when it has moved a predetermined distance. The NC device 150 performs similar measurements for the remaining measurement points. The calculation unit 24 calculates the coordinates of the corner between the two side surfaces that the measurement probe 114 contacts, from the coordinate values of the two measurement points.

When the operator selects five or more measurement points (No in step S18), since there are no measurement types which can be automatically performed (there are no options), none of the icons 64a to 64e are displayed in the measurement method display area 64.

According to the present embodiment, since the operator feeds the measurement probe 114 using the manual pulse generator 50 to directly instruct the measurement device on the measurement points, it is not necessary for the operator to select the measurement items or input the approximate dimensions of the workpiece when performing measurement.

The measurement results can be output to the NC device 150. As a result, the upper surface position of the workpiece W (FIG. 12), the corner positions of the workpiece W (FIG. 14), and the center position of the workpiece W (FIGS. 15 and 16) can be set in the workpiece coordinate system of the NC device 150.

By performing measurements in accordance with the measurement program stored in the NC device 150 in this manner, the approach speed of the measurement probe 114 to the workpiece W can be optimized, whereby measurement errors caused by the measurement probe 114 can be reduced.

It should be noted when the machine 100 comprises rotary feed axes, the relative orientations of the workpiece W and the measurement probe 114 can be corrected by the rotary feed axes based on the measurement point information. When the measurement probe 114 is brought into contact with the workpiece W, it is preferable to bring the measurement probe 114 into contact from a direction orthogonal to the surface of the workpiece W. If the measurement probe 114 is not brought into contact from the orthogonal direction, the measurement probe 114 will not bend uniformly, and the amount of bending of the measurement probe 114 at the time of contact will change, resulting in an error in the measurement result. In order to perform measurement under the condition of contact from the orthogonal direction, the measurement probe 114 can be brought into contact with the surface of the workpiece W from the orthogonal direction by the rotary feed device in response to the contact instruction operation by the operator through manual pulse operation.

In the present invention, all the measurement point information required for a plurality of types of measurements is taught by contacting the measurement probe with the workpiece using a manual pulse generator, and the measurement point information required for the first measurement is selected from the taught measurement point information to execute an automatic measurement, and then the measurement point information required for a subsequent measurement is reselected to execute the automatic measurement, thereby allowing a plurality of types of measurements to be performed continuously. In this manner, the efficiency of measurement operations can be improved by continuously executing a plurality of types of measurements after finishing teaching of all the necessary measurement points.

### DESCRIPTION OF REFERENCE SIGNS

- 10: Measurement Controller
- 12: Measurement Axis Determination Unit
- 14: Measurement Direction Determination Unit
- 16: Measurement Point Counting Unit
- 18: Measurement Step Storage Unit
- 20: Automatic Measurement Instruction Unit
- 22: Measurement Type Determination Unit
- 24: Calculation Unit
- 26: Measurement Point Coordinate Storage Unit
- 28: Display Control Unit
- 30: Measurement Program Storage Unit
- 50: Manual Pulse Generator
- 51: Pulse Generation Dial
- 52: Selection Switch
- 53: Magnification Selection Switch
- 54: Emergency Stop Button
- 55: Enable Switch
- 62: Measurement Point Display Area
- 64: Measurement Method Display Area
- 64a: Reference Surface Measurement Icon
- 64b: Incline Measurement Icon
- 64c: Corner Measurement Icon
- 64d: Pocket Measurement Icon
- 64e: Block Measurement Icon
- 66: Measurement Point Delete Button
- 68: Measurement Point Delete All Button
- 70: Automatic Measurement Button
- 80: Setting Screen
- 82: Display Part
- 84: Increase Button
- 86: Decrease Button
- 100: Machine
- 102: Bed
- 104: Column
- 106: Table
- 108: X-axis Slider
- 110: Spindle Head
- 112: Spindle
- 114: Measurement Probe
- 116: X-axis Scale
- 118: Y-axis Scale
- 120: Z-axis Scale
- 150: NC Device
- 200: Operation Panel
- 202: Touch Panel
- 204: Key Switch

## Claims

1. A machine having a workpiece measurement function, the machine comprising:
a workpiece attachment part for attaching the workpiece,
a measurement probe for detecting contact with the workpiece,
a linear feed axis for moving the workpiece attachment part and the measurement probe relative to each other,
an operation terminal which is provided so as to be capable of being carried to an operation position near the workpiece attachment part and for inputting movement commands for moving the workpiece and the measurement probe relative to each other to the feed axis,
a storage unit for storing measurement point information, which is a movement direction and coordinates detected when the measurement probe contacts the workpiece,
a display unit for displaying the measurement point information stored in the storage unit, and
a measurement controller which is configured so as to be capable of selecting measurement point information displayed on the display unit, generating a measurement program based on measurement point information selected by an operator, and measuring the workpiece by executing the measurement program.

2. The machine having a workpiece measurement function according to claim 1, wherein the measurement controller predicts a measurement type from a combination of a selected plurality of sets of measurement point information and displays it on a display unit.

3. The machine having a workpiece function according to claim 1, wherein the display unit displays a screen for setting a safe height to prevent the measurement probe from colliding with the workpiece, and creates a measurement program based on the set safe height.

4. The machine having a measurement function according to claim 1, wherein the machine further comprises a rotary feed axis for changing a relative orientation of the workpiece and the measurement probe and is capable of correcting the relative orientation of the workpiece and the measurement probe by rotating the rotary feed axis based on the selected measurement point information.

5. The machine having a measurement function according to claim 1, further comprising a measurement program storage unit, and which can reuse the measurement program.

6. The machine having a measurement function according to claim 1, wherein the machine is a machining center comprising a spindle in which a tool can be attached to a tip thereof, a table which is arranged so as to face the spindle for attaching a workpiece, a tool magazine for housing a plurality of tools, and an automatic tool changer for exchanging tools between the spindle and the tool magazine, wherein
a measurement probe can be attached to the spindle by the automatic tool changer.
